(19) Europäisches Patentamt
European Patent Office
Office européen des brevets

(11) **EP 2 496 929 B1**

(12) **EUROPEAN PATENT SPECIFICATION**

(45) Date of publication and mention
of the grant of the patent:
**03.07.2013 Bulletin 2013/27**

(21) Application number: **10768432.6**

(22) Date of filing: **05.10.2010**

(51) Int Cl.:
*G01N 21/55* (2006.01)

(86) International application number:
**PCT/EP2010/064862**

(87) International publication number:
**WO 2011/054614 (12.05.2011 Gazette 2011/19)**

(54) **A NANOHOLE ARRAY BIOSENSOR**

BIOSENSOR MIT NANOLOCH-ARRAY

BIOCAPTEUR À GROUPEMENT DE NANOTROUS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.11.2009 IE 20090855**

(43) Date of publication of application:
**12.09.2012 Bulletin 2012/37**

(73) Proprietor: **Waterford Institute Of Technology
Waterford (IE)**

(72) Inventor: **O'MAHONY, Joseph
Waterford (IE)**

(74) Representative: **Boyce, Conor
FRKelly
27 Clyde Road
Ballsbridge
Dublin 4 (IE)**

(56) References cited:
• IM H; LESUFFLEUR A; LINDQUIST N C; OH S-H: "Plasmonic nanoholes in a multichannel microarray format for parallel kinetic assays and differential sensing", ANALYTICAL CHEMISTRY, vol. 81, no. 8, 15 April 2009 (2009-04-15), pages 2854-2859, XP002617388, DOI: 10.1021/ac802276x
• DHAWAN A ET AL: "Engineering surface plasmon based fiber-optic sensors", MATERIALS SCIENCE AND ENGINEERING B, ELSEVIER SEQUOIA, LAUSANNE, CH, vol. 149, no. 3, 15 April 2008 (2008-04-15), pages 237-241, XP022619360, ISSN: 0921-5107, DOI: DOI: 10.1016/J.MSEB.2007.09.076 [retrieved on 2008-04-15]
• ELTOUKHY H; SALAMA K; GAMAL A E: "A 0.18-[mu]m CMOS bioluminescence detection lab-on-chip", IEEE JOURNAL OF SOLID-STATE CIRCUITS, vol. 41, no. 3, 3 March 2006 (2006-03-03), pages 651-662, XP002617389, DOI: 10.1109/JSSC.2006.869785
• BROLO A G ET AL: "Surface plasmon sensor based on the enhanced light transmission through arrays of nanoholes in gold films", LANGMUIR 20040608 AMERICAN CHEMICAL SOCIETY US, vol. 20, no. 12, 8 June 2004 (2004-06-08), pages 4813-4815, XP002617390, DOI: DOI:10.1021/LA0493621

## Description

This invention relates to a nanohole array biosensor, and a biosensing apparatus including such a sensor.

## Background

W.L. Barnes, A.Dereux, T.W. Ebbesen, Nature 24 (2003) 824-830 discloses extraordinary optical transmission (EOT) through sub-wavelength apertures where visible light, normally incident on a metal film containing a periodic array of sub-wavelength nanoholes, exhibits a peak transmission intensity which is orders of magnitude higher than had been predicted previously. The nanohole arrays were fabricated in an optically thick gold film deposited on a glass substrate using a focused ion beam milling.

A short ordered array of nanoholes acts in a similar way to a periodic grating allowing the incident radiation to stimulate surface plasmon modes of a characteristic frequency that depends on the dielectric function of the metal, the periodicity of the hole array and the dielectric function of medium at the surface of the metal film. The process by which light transfers through the hole depends on the thickness of the metal film.

For optically thick films, where the thickness is too great to allow plasmon/plasmon coupling between the two sides of the film, the process involves evanescent waves tunnelling down through the aperture walls resulting in a small amplitude of light at the emission side, for example, as disclosed by A. Krishnan, T. Thio, TJ. Kim, H.J. Lezec, T.W. Ebbesen, P.A. Wolff, J. Pendry, L.Martin Moreno, F.J. Garcia-Vidal, Opt. Commun 200(2001) 1-7. At this point the plasmons recouple to the metallic film on the opposite side and their associated fields interfere resulting in the propagation of light.

For optically thin metal films where there is considerable plasmon/plasmon overlap the light emission is greatly enhanced.

P.R.H. Stark, A.E. Halleck, D.N. Larson, Methods 37 (2005) 37-47 discloses the application of nanohole plasmons in the area of biosensing. This involves a sensing method for detecting a refractive index change through the variation in light intensity transmitted through nanohole structures fabricated on a gold film. The nanohole structures were fabricated in an optically thick film using a focused ion beam to produce an array of holes with a periodicity of 500 nm.

Separately, A. Dahlin, M. Zäch, T. Rindzevicius, M. Kall, D.S. Sutherland, F. Höök J. Am. Chem. Soc. 127 (2005) 5043-5048 discloses the suitability of EOT for biosensing. In their experiments nanoholes were fabricated randomly in an optically thin film of gold and a biotin/neutravidin immunoassay concept was demonstrated. In both cases, the biosensor was based on the transmission of light through a periodic array of nanoholes fabricated on a standard microscope glass slide.

J.C. Yang, J. Ji, J. M. Hogle, D.N. Larson Biosensors and Bioelectronics, 24(2009), 2334-2338 discloses constructing up to 25 independent nanohole arrays of different periodicities within a $60 \mu m$ x $50 \mu m$ area on a single substrate for multiplexed plasmonic sensing.

A.Dhawan, J.F. Muth Materials Science and Engineering: B, 149(3), (2008), 237-241 discloses arrays of nanoholes constructed at the tips of individual single mode and multimode optical fibres and demonstrated their feasibility for fibre optic sensing.

H. Im et al: "Plasmonic nanoholes in a multichannel microarray format for parallel kinetic assays and differential sensing" (ANALYTICAL CHEMISTRY, vol. 81, no. 8, 15 April 2009) discloses a biosensor including a fiber optic spectrometer with a separate plurality of nanohole arrays formed in a gold film.

H. Eltoukhy et al: "A0.18-$\mu$m CMOS bioluminescence detection lab-on-chip" (IEEE JOURNAL OF SOLID-STATE CIRCUITS, vol. 41, no. 3, 3 March 2006) discloses a biosensor with a fiber-optic faceplate with immobilized luminescent probes.

A.G. Brolo et al: "Surface plasmon sensor based on the enhanced light transmission through arrays of nanoholes in gold films" (LANGMUIR (AMERICAN CHEMICAL SOCIETY), vol. 20, no. 12, 8 June 2004) discloses a surface plasmon sensor including a fiber optic spectrometer with a separate plurality of nanohole arrays formed in a gold film.

Surface plasmons (SP's) are refractive index sensitive charge density oscillations occurring on metal surfaces. Conveniently stimulated with light via suitable coupling mechanisms that increase the momentum of the incident light to satisfy the plasmon dispersion relation, they have been successfully deployed in a number of commercial instruments as a method of investigating chemical and biochemical interactions. As disclosed in US 6,441,906 and US 2006/0108219, these instruments typically employ prisms, waveguides or gratings to increase the momentum of light incident on a continuous metal surface containing a layer of receptive molecules acting as a dielectric medium. Their sensitivity to changes in the refractive index around the interface of the metal and dielectric results in changes the angular distribution, reflected spectra or reflected intensity of the light. The measurement of which provides a label free measurement of ligand-receptor binding for chemical and biochemical assays.

These methods of plasmon resonance detection do not lend themselves easily to high throughput screening applications where multiple individual assays are recorded at the one time.

## Summary of the Invention

The present invention provides a biosensor including a light transmissive optical component comprising a plurality of optical fibres fused side-by-side, the fibres extending between and terminating at opposite faces of the component for transmission of light through the component, a metallic film coated on at least part of one face of the optical component, and a plurality of nanohole arrays formed in the metallic film.

Preferably the one face of the optical component is formed with a plurality of depressions and a respective metallic film nanohole array is formed in at least some of the depressions.

The invention further provides a method of making a biosensor including providing a light transmissive optical component comprising a plurality of optical fibres fused side-by-side, the fibres extending between and terminating at opposite faces of the component for transmission of light through the component, coating a metallic film on at least part of one face of the optical component, and a forming plurality of nanohole arrays in the metallic film.

The invention further provides a biosensing apparatus comprising a biosensor as specified above, a source of monochromatic light at a given wavelength for illuminating the nanohole arrays, and processing means for processing signals output from the light sensing array, wherein the nanoholes have sub-wavelength dimensions and the metallic film has at least one hole with a super-wavelength dimension.

**Brief Description of the Drawings**

Embodiments of the invention will now be described, by way of example, with reference to the accompanying drawings, in which:

Figure 1 is a schematic diagram of a conventional arrangement for measuring EOT.

Figure 2 is a schematic side view of an embodiment of a biosensor according to the invention.

Figure 3 is a schematic diagram of a biosensing apparatus incorporating a biosensor as seen in Figure 2.

**Detailed Description of the Embodiment**

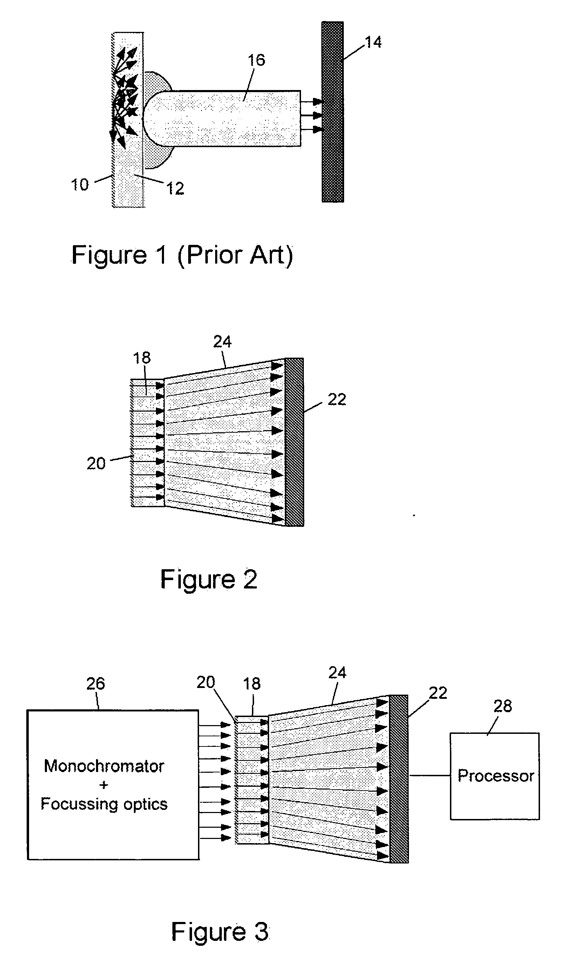

Figure 1 shows a prior art nanohole array biosensing apparatus for measuring EOT. A plurality of sub-wavelength nanohole arrays is formed in a gold film 10 coated on a glass slide 12. The gold film 10 is illuminated with monochromatic light and the light transmitted through the slide 12 is focussed on a CDD detector (light sensing array) 14 by an oil immersion lens 16. In use a small quantity of a biological analyte is placed on each nanohole array and the intensity of light sensed by the CCD detector in respect of each nanohole array is analysed in a known manner to provide information about the sample. A disadvantage of this apparatus is that light scattering at the interface of the nanohole film and the glass slide reduces the efficiency of light transfer to the CCD detector.

Figure 2 shows an embodiment of biosensor according to the invention. The biosensor includes a fibre optic faceplate 18, for example of the type produced by Schott North America, Inc., Elmsford, NY 10523, USA. The faceplate 18 comprises a plurality of parallel optical fibres fused side-by-side, the fibres extending perpendicularly between and terminating at opposite parallel major surfaces of the faceplate to form an optically transparent plate that allows the 1:1 transmission of light from one major surface of the plate to the other. Preferably, each optical fibre has a core diameter of greater than 6 microns and the fused faceplate is preferably larger than 1 cm$^2$ in area, most preferably up to 15cm x 15cm in size corresponding to the size of a conventional micro well plate.

In a first embodiment, each major surface of the faceplate 18 is polished flat and smooth with no additional structures other than the nanohole arrays to be formed on one of them.

In a second embodiment, one major surface of the faceplate 18 is provided with a matrix of circular depressions or wells that accommodate the nanohole arrays and, in use, the analytes to be tested. Preferably, the series of wells are fabricated using powder blasting such as provided by Anteryon BV, Eindhoven, The Netherlands. The faceplate 18 may comprise up to 1536 individual wells in a rectangular matrix, each well accommodating up to 1 ml of liquid. For example, each well could be up to 2mm deep and 0.5cm$^2$ in area.

One major surface of the faceplate 18 is at least partially coated with a film 20 of gold. The film 20 has a thickness less than 100nm, preferably a thickness less than 80nm, and most preferably a thickness of from 10nm to 14nm. As discussed above, layers thicker than 100nm are optically thick and do not exhibit EOT. Where the faceplate 18 is provided with wells on one major surface, the gold film is deposited on that surface, at least within the wells.

A plurality of rectangular arrays of nanoholes are formed in the gold film 20. Where the faceplate 18 has wells the arrays of nanoholes are formed on the gold film within the wells, at least the majority of the wells containing a respective array acting as an individual sensor (some wells may contain larger holes, as will be described). The nanohole arrays may be manufactured by electron beam or soft colloidal lithography techniques such as described in "Colloidal lithography and current fabrication techniques producing in-plane nanotopography for biological applications", M A Wood, J R Soc Interface (2007) 4, 1-17, 23 August 2006.

The nanoholes are preferably circular and have sub-wavelength diameters, typically in the range of 80nm to 200nm but in any event preferably less than 500nm. By "sub-wavelength" we mean that the diameter of the nanoholes is less than the wavelength of light used to illuminate the arrays in use. Each array has a periodicity P that is an integer multiple of the diameter of the nano-

holes:

$$P = d(1+n)$$

where d is the diameter of the nanohole and n preferably has an integer value between 0 and 4. The periodicity of the nanoholes is preferably no greater than 2.5 microns.

Provided they meet the above requirements, it is not necessary that all the arrays have the same nanohole diameter or array periodicity, and they need not be rectangular arrays although they should be regular. Also, the nanoholes need not be circular, in which case d above refers to their maximum dimension.

In addition to the sub-wavelength nanoholes, a number super-wavelength holes can be formed in the gold film in at least some of the wells (where wells are present), and these will have diameters or maximum dimensions at least ten times greater than the nanoholes, typically greater than 1.6 microns. As the faceplate 18 allows light to pass directly through these super-wavelength holes, they act as blanks which can be used to determine the intensity of light incident on adjacent nanoholes so enabling sensing circuitry to determine a baseline for light being transmitted through the adjacent nanoholes and so improve signal to noise ratio in later processing.

The major surface of the faceplate 18 opposite that bearing the gold film is coupled to a CCD detector 22 via a fibre optic taper 24 which is bonded to the CCD detector. CCD detectors can be from 20 x 20mm to 100 x 100mm in area and include up to 8192 x 8192 pixels; the taper 24 can either widen or narrow from the detector 22 to the faceplate 18 to compensate for the difference in area between the faceplate 18 and the detector. The taper acts as a waveguide to transmit the light from the sensor directly to the CCD pixels. E2V Technologies plc, of Chelmsford, Essex CM1 2QU, United Kingdom supply CCD sensors with fibre optic tapers attached. The fused fibre faceplate 18 can interface with the CCD/taper assembly through an optical gel with the two components then spring-coupled together.

The fibre optic faceplate 18 has high numerical aperture for direct collection of the transmitted light, the numerical aperture being close to 1 for the both the CCD taper and the fibre optic faceplate. Binning or merging of individual pixels to form a super pixel creates an optical detector of sufficient size to collect of light from a single set of sensor arrays forming the actual sensor.

Preferably, single wavelength light from a monochromator 26, Figure 3, is focussed directly on the gold film 20 on the faceplate 18. The transmission spectrum is recorded by the CCD detector 22 for each nanohole array. In this case the peak transmission wavelength is determined by processing circuitry 28 which processes signals output from the CCD detector. The peak transmission wavelength is related to the periodicity of the nanohole array, the dielectric function of the gold film and the dielectric function of the analyte contacting the film according to the following equation:

$$\lambda_{max} = \frac{P}{v}\sqrt{\frac{\varepsilon_m \varepsilon_d}{\varepsilon_m + \varepsilon_d}}$$

where v is the order of diffraction and P is the periodicity of the grating.

An alternative arrangement allows broadband radiation to directly illuminate the sensor. In this case the change in amplitude of the transmitted signal is measured.

In other embodiments the faceplate 18 may be directly optically coupled to the CCD detector 22 (i.e. the taper 24 omitted) if the areas of the two components are compatible, and the faceplate itself may incorporate a slight taper. Alternatively, the gold film 20 and nanohole arrays may be formed directly on the taper 24, omitting the faceplate 18.

Although the film 20 has been made of gold in the embodiments, other metallic films may be used, such as silver, platinum and palladium.

The invention is not limited to the embodiments described herein which may be modified or varied without departing from the scope of the invention.

## Claims

1. A biosensor including a light transmissive optical component (18) comprising a plurality of optical fibres fused side-by-side, the fibres extending between and terminating at opposite faces of the component for transmission of light through the component, a metallic film (20) coated on at least part of one face of the optical component, and a plurality of nanohole arrays formed in the metallic film.

2. A biosensor as claimed in claim 1, wherein the optical fibres extend substantially parallel to one another between the opposite faces of the optical component.

3. A biosensor as claimed in claim 1, wherein the optical fibres converge between the opposite faces of the optical component.

4. A biosensor as claimed in claim 1, 2 or 3, wherein the component is a plate with the opposite faces being opposite substantially parallel surfaces of the plate.

5. A biosensor as claimed in any preceding claim, wherein the maximum dimension d of the nanoholes

6. A biosensor as claimed in any preceding claim, wherein each array has a periodicity of d(1+n) where $\underline{d}$ is the maximum dimension of the nanoholes and $\underline{n}$ has a value from 0 to 4.

7. A biosensor as claimed in any preceding claim, wherein the thickness of the metallic layer is less than 100nm, preferably less than 80nm, and most preferably from 10nm to 14nm.

8. A biosensor as claimed in any preceding claim, wherein the metallic layer has at least one hole whose maximum dimension is at least ten times as large as the maximum dimension of the nanoholes.

9. A biosensor as claimed in any preceding claim, wherein the one face of the optical component is formed with a plurality of depressions and a respective metallic film nanohole array is formed in at least some of the depressions.

10. A biosensor as claimed in any preceding claim, wherein the other face of the optical component is optically coupled to a light sensing array (22).

11. A biosensor as claimed in claim 10, wherein the other face is directly coupled to the light sensing array.

12. A biosensor as claimed in claim 10, wherein the other face is indirectly coupled to the light sensing array via a fibre optic taper (24) to at least partially compensate for a difference in the area between the other face and the area of the sensing array.

13. A biosensing apparatus comprising a biosensor as claimed in claim 10, 11 or 12, a source of monochromatic light (26) at a given wavelength for illuminating the nanohole arrays, and processing means (28) for processing signals output from the light sensing array, wherein the nanoholes have sub-wavelength dimensions and the metallic film has at least one hole with a super-wavelength dimension.

14. A method of making a biosensor including providing a light transmissive optical component (18) comprising a plurality of optical fibres fused side-by-side, the fibres extending between and terminating at opposite faces of the component for transmission of light through the component, coating a metallic film (20) on at least part of one face of the optical component, and a forming plurality of nanohole arrays in the metallic film.

15. A method as claimed in claim 14, wherein the one face of the optical component is formed with a plurality of depressions and a respective metallic film nanohole array is formed in at least some of the depressions.

**Patentansprüche**

1. Biosensor, umfassend eine lichtdurchlässige optische Komponente (18), die mehrere nebeneinander miteinander verschmolzene Lichtleitfasern umfasst, wobei sich die Fasern zwischen gegenüberliegenden Stirnflächen der Komponente erstrecken und an diesen enden, um Licht durch die Komponente zu übertragen, einen Metallfilm (20), der auf mindestens einen Teil einer Stirnfläche der optischen Komponente aufgetragen ist, und mehrere in dem Metallfilm gebildete Nanolochanordnungen.

2. Biosensor nach Anspruch 1, wobei sich die Lichtleitfasern im Wesentlichen parallel zueinander zwischen den gegenüberliegenden Stirnflächen der optischen Komponente erstrecken.

3. Biosensor nach Anspruch 1, wobei die Lichtleitfasern zwischen den gegenüberliegenden Stirnflächen der optischen Komponente zusammenlaufen.

4. Biosensor nach Anspruch 1, 2 oder 3, wobei es sich bei der Komponente um eine Platte handelt und es sich bei den gegenüberliegenden Stirnflächen um gegenüberliegende im Wesentlichen parallele Oberflächen der Platte handelt.

5. Biosensor nach einem der vorangehenden Ansprüche, wobei das größte Maß $\underline{d}$ der Nanolöcher weniger als 500 nm beträgt, bevorzugt von 80 nm bis 200 nm.

6. Biosensor nach einem der vorangehenden Ansprüche, wobei jede Anordnung eine Periodizität von d (1+n) aufweist, wobei $\underline{d}$ das größte Maß der Nanolöcher ist und $\underline{n}$ einen Wert von 0 bis 4 aufweist.

7. Biosensor nach einem der vorangehenden Ansprüche, wobei die Dicke der Metallschicht weniger als 100 nm beträgt, bevorzugt weniger als 80 nm und am besten von 10 nm bis 14 nm.

8. Biosensor nach einem der vorangehenden Ansprüche, wobei die Metallschicht mindestens ein Loch aufweist, dessen größtes Maß mindestens zehnmal so groß ist wie das größte Maß der Nanolöcher.

9. Biosensor nach einem der vorangehenden Ansprüche, wobei die eine Stirnfläche der optischen Komponente mit mehreren Vertiefungen gebildet ist und in mindestens einigen der Vertiefungen eine jeweilige Metallfilm-Nanolochanordnung gebildet ist.

**10.** Biosensor nach einem der vorangehenden Ansprüche, wobei die andere Stirnfläche der optischen Komponente optisch an eine Lichtsensoranordnung (22) gekoppelt ist.

**11.** Biosensor nach Anspruch 10, wobei die andere Stirnfläche direkt an die Lichtsensoranordnung gekoppelt ist.

**12.** Biosensor nach Anspruch 10, wobei die andere Stirnfläche indirekt über einen Lichtleitfaserkegel (24) an die Lichtsensoranordnung gekoppelt ist, um mindestens teilweise einen Flächeninhaltsunterschied zwischen der anderen Stirnfläche und dem Flächeninhalt der Sensoranordnung auszugleichen.

**13.** Biosensorvorrichtung, umfassend einen Biosensor nach Anspruch 10, 11 oder 12, eine Quelle von monochromatischem Licht (26) mit einer gegebenen Wellenlänge zum Anstrahlen der Nanolochanordnungen, und ein Verarbeitungsmittel (28) zum Verarbeiten von von der Lichtsensoranordnung ausgegebenen Signalen, wobei die Nanolöcher Subwellenlängenmaße aufweisen und der Metallfilm mindestens ein Loch mit einem Superwellenlängenmaß aufweist.

**14.** Verfahren zum Herstellen eines Biosensors, umfassend das Bereitstellen einer lichtdurchlässigen optischen Komponente (18), die mehrere nebeneinander miteinander verschmolzene Lichtleitfasern umfasst, wobei sich die Fasern zwischen gegenüberliegenden Stirnflächen der Komponente erstrecken und an diesen enden, um Licht durch die Komponente zu übertragen, Auftragen eines Metallfilms (20) auf mindestens einen Teil einer Stirnfläche der optischen Komponente und Bilden von mehreren Nanolochanordnungen in dem Metallfilm.

**15.** Verfahren nach Anspruch 14, wobei die eine Stirnfläche der optischen Komponente mit mehreren Vertiefungen gebildet ist und in mindestens einigen der Vertiefungen eine jeweilige Metallfilm-Nanolochanordnung gebildet ist.

**Revendications**

**1.** Biocapteur comportant un composant optique transmettant la lumière (18) comprenant une pluralité de fibres optiques fusionnées côté à côte, les fibres s'étendant entre des faces opposées du composant et se terminant au niveau de celles-ci pour transmettre la lumière à travers le composant, un film métallique (20) revêtu sur au moins une partie d'une face du composant optique, et une pluralité de matrices de nanotrous formées dans le film métallique.

**2.** Biocapteur selon la revendication 1, dans lequel les fibres optiques s'étendent sensiblement parallèlement les unes aux autres entre les faces opposées du composant optique.

**3.** Biocapteur selon la revendication 1, dans lequel les fibres optiques convergent entre les faces opposées du composant optique.

**4.** Biocapteur selon la revendication 1, 2 ou 3, dans lequel le composant est une plaque, les faces opposées étant des surfaces opposées sensiblement parallèles de la plaque.

**5.** Biocapteur selon l'une quelconque des revendications précédentes, dans lequel la dimension maximum $\underline{d}$ des nanotrous est inférieure à 500 nm, de préférence de 80 nm à 200 nm.

**6.** Biocapteur selon l'une quelconque des revendications précédentes, dans lequel chaque matrice a une périodicité de d(1+n) où $\underline{d}$ est la dimension maximum des nanotrous et $\underline{n}$ a une valeur de 0 à 4.

**7.** Biocapteur selon l'une quelconque des revendications précédentes, dans lequel l'épaisseur de la couche métallique est inférieure à 100 nm, de préférence inférieure à 80 nm, et idéalement de 10 nm à 14 nm.

**8.** Biocapteur selon l'une quelconque des revendications précédentes, dans lequel la couche métallique comporte au moins un trou dont la dimension maximum est au moins dix fois plus grande que la dimension maximum des nanotrous.

**9.** Biocapteur selon l'une quelconque des revendications précédentes, dans lequel une face du composant optique est formée avec une pluralité de creux et une matrice de nanotrous de film métallique respective est formée dans au moins certains des creux.

**10.** Biocapteur selon l'une quelconque des revendications précédentes, dans lequel l'autre face du composant optique est couplée optiquement à un réseau détecteur de lumière (22).

**11.** Biocapteur selon la revendication 10, dans lequel l'autre face est couplée directement au réseau détecteur de lumière.

**12.** Biocapteur selon la revendication 10, dans lequel l'autre face est couplée indirectement au réseau détecteur de lumière par l'intermédiaire d'un raccord progressif de fibre optique (24) pour compenser au moins partiellement une différence dans la zone entre fautre face et la zone du réseau détecteur.

**13.** Appareil de biocaptage comprenant un biocapteur selon la revendication 10, 11 ou 12, une source de lumière monochromatique (26) à une longueur d'onde donnée pour éclairer les matrices de nanotrous, et un moyen de traitement (28) pour traiter les signaux produits par le réseau détecteur de lumière, les nanotrous ayant des dimensions de sous-longueurs d'onde et le film métallique ayant au moins un trou ayant une dimension de super-longueur d'onde.

**14.** Procédé de fabrication d'un biocapteur comportant la fourniture d'un composant optique transmettant la lumière (18) comprenant une pluralité de fibres optiques fusionnées côté à côte, les fibres s'étendant entre des faces opposées du composant et se terminant au niveau de celles-ci pour transmettre la lumière à travers le composant, le revêtement d'un film métallique (20) sur au moins une partie d'une face du composant optique, et la formation d'une pluralité de matrices de nanotrous dans le film métallique.

**15.** Procédé selon la revendication 14, dans lequel une face du composant optique est formée avec une pluralité de creux et une matrice de nanotrous de film métallique respective est formée dans au moins certains des creux.

Figure 1 (Prior Art)

Figure 2

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6441906 B

- US 20060108219 A

### Non-patent literature cited in the description

- **W.L. BARNES ; A.DEREUX ; T.W. EBBESEN.** *Nature,* 2003, vol. 24, 824-830
- **A. KRISHNAN ; T. THIO ; TJ. KIM ; H.J. LEZEC ; T.W. EBBESEN ; P.A. WOLFF ; J. PENDRY ; L.MARTIN MORENO ; F.J. GARCIA-VIDAL.** *Opt. Commun,* 2001, vol. 200, 1-7
- **P.R.H. STARK ; A.E. HALLECK ; D.N. LARSON.** *Methods,* 2005, vol. 37, 37-47
- **A. DAHLIN ; M. ZÄCH ; T. RINDZEVICIUS ; M. KALL ; D.S. SUTHERLAND ; F. HÖÖK.** *J. Am. Chem. Soc.,* 2005, vol. 127, 5043-5048
- **J.C. YANG ; J. JI ; J. M. HOGLE ; D.N. LARSON.** *Biosensors and Bioelectronics,* 2009, vol. 24, 2334-2338
- **A.DHAWAN ; J.F. MUTH.** *Materials Science and Engineering: B,* 2008, vol. 149 (3), 237-241

- **H. IM et al.** Plasmonic nanoholes in a multichannel microarray format for parallel kinetic assays and differential sensing. *ANALYTICAL CHEMISTRY,* 15 April 2009, vol. 81 (8
- **H. ELTOUKHY et al.** A0.18-$\mu$m CMOS bioluminescence detection lab-on-chip. *IEEE JOURNAL OF SOLID-STATE CIRCUITS,* 03 March 2006, vol. 41 (3
- Surface plasmon sensor based on the enhanced light transmission through arrays of nanoholes in gold films. **A.G. BROLO et al.** LANGMUIR. AMERICAN CHEMICAL SOCIETY, 08 June 2004, vol. 20
- **M A WOOD.** Colloidal lithography and current fabrication techniques producing in-plane nanotopography for biological applications. *J R Soc Interface,* 23 August 2006, vol. 4, 1-17